# EUROPEAN PATENT APPLICATION

(11) **EP 4 517 733 A2**
(43) Date of publication of application: **05.03.2025**
(21) Application number: 23796955.5
(22) Date of filing: 27.04.2023
(51) Int. Cl.: G10H 1/00, G10L 13/02, G06F 3/048

(54) **MUSIC GENERATION METHOD, APPARATUS AND SYSTEM, AND STORAGE MEDIUM**

(30) Priority: 29.04.2022 CN 202210475367
(71) Applicant: Lemon Inc., Grand Cayman, KY1-1205 (KY)
(72) Inventor: XUE, Yufan, Beijing 100028 (CN); ZHENG, Qiang, Beijing 100028 (CN); NIU, Dong, Beijing 100028 (CN); XU, Liangqin, Beijing 100028 (CN); WANG, Xiaochan, Beijing 100028 (CN); CHEN, Jitong, Los Angeles, California 90066 (US); LI, Bochen, Los Angeles, California 90066 (US); LI, Naihan, Beijing 100028 (CN)
(74) Representative: Dentons UK and Middle East LLP
(86) International application number: PCT/SG2023/050290
(87) International publication number: WO 2023/211386

(57) **Abstract**

Embodiments of the present disclosure relates to a music generation method, apparatus and system, and a storage medium. In at least some embodiments of the present disclosure, in response to an operation of a user operation of triggering a music generation control, displaying a music generation interface comprising a text input box, a music generation control and a music configuration item, so that the user can input a custom text in the text input box and configure a music melody by means of the music configuration item; then in response to the user operation of triggering the music generation control, generating a voice on the basis of the custom text input by the user, and on the basis of the generated voice and the music melody configured by the user, generating music comprising the voice corresponding to the custom text.

## Description

### CROSS-REFERENCE TO RELATED APPLICATIONS

This application is based on and claims priority of the application with Chinese application number 202210475367.3, filed on April 29, 2022, the disclosure content of which is hereby incorporated into herein in its entirety.

### TECHNICAL FIELD

Embodiments of the present disclosure relate to the field of music generation technology, and in particular, to a music generation method, apparatus, system and storage medium.

### BACKGROUND

Currently, with the development of Internet technology and smart mobile devices (such as smartphones), music creation has become an important part in people's entertainment life.

### SUMMARY

At least some embodiments of the present disclosure provide a music generation method, apparatus, system and storage medium.

In a first aspect, an embodiment of the present disclosure provides a music generation method, comprising:
in response to a trigger operation of a music generation control, displaying a music generation interface, the music generation interface including a text input box, a music generation control and at least one music configuration item;
in response to a trigger operation of the text input box, obtaining a custom text input by a user, and in response to a trigger operation of the at least one music configuration item, determining configuration information corresponding to the at least one music configuration item; and
in response to a trigger operation of the music generation control, generating a voice based on the custom text, and determining a music melody based on the configuration information corresponding to the at least one music configuration item, generating a music including the voice corresponding to the custom text based on the voice and the music melody.

In some embodiments, a sample text is displayed in the text input box, and the music generation method further comprises:
if the custom text input by the user is not obtained, in response to the trigger operation of the music generation control, generating a voice based on the sample text, and determining a music melody based on the configuration information corresponding to the at least one music configuration item, generating a music including the voice corresponding to the sample text based on the voice and the music melody.

In some embodiments, the music configuration items can be preset with configuration information, and the music generation method further comprises:
if the user does not trigger the at least one music configuration item, in response to the trigger operation of the music generation control, generating a voice based on the custom text, and determining a music melody based on the preset configuration information of the at least one music configuration item, generating a music including the voice corresponding to the custom text based on the voice and the music melody.

In some embodiments, a sample text is displayed in the text input box, the music configuration items can be preset with configuration information, and the music generation method further comprises:
if the custom text input by the user is not obtained and the user does not trigger the at least one music configuration item, in response to the trigger operation of the music generation control, generating a voice based on the sample text, and determining a music melody based on configuration information preset by the at least one music configuration item, generating a music including the voice corresponding to the sample text based on the voice and the music melody.

In some embodiments, the music generation control is a first control; the music generation interface is a first interface; the text input box is a lyrics input box; and the at least one music configuration item includes a song melody configuration item;
in response to the trigger operation of the music generation control, generating a voice singing the lyrics based on the custom text input in the lyrics input box, and determining a song melody based on configuration information corresponding to the song melody configuration item, performing synthesis based on the voice singing the lyrics and the song melody, generating a song including the voice singing the lyrics.

In some embodiments, the generating a voice singing the lyrics based on the custom text input in the lyrics input box, comprises:
aligning the custom text with the song melody corresponding to the song melody configuration item, and determining the correspondence between text units in the custom text and notes in the song melody;
generating the voice singing the lyrics from the aligned custom text.

In some embodiments, the at least one music configuration item further comprises: a timbre configuration item and a music format configuration item;
generating a voice singing the lyrics from the custom text input in the lyrics input box based on a timbre corresponding to the timbre configuration item, the timbre of the voice singing the lyrics being the timbre corresponding to the timbre configuration item;
based on a music format corresponding to the music format configuration item, generating a song with the music format based on the voice singing the lyrics and the song melody.

In some embodiments, the music generation control is a second control; the music generation interface is a second interface; the text input box is a slogan input box; and the at least one music configuration item includes a music melody configuration item;
in response to the trigger operation of the music generation control, generating a voice for a slogan based on a custom text input in the slogan input box, and determining a music melody based on configuration information corresponding to the music melody configuration item, generating a music including the voice for the slogan based on the voice for the slogan and the music melody.

In some embodiments, the generating a music including the voice for the slogan based on the voice for the slogan and the music melody, comprises:
determining a musical key point in the music melody, the music melody having a mutation at the position of the musical key point;
based on the position of the musical key point, performing synthesis of the voice for the slogan with the music melody to obtain a synthesized music; in the synthesized music, the voice for the slogan appears at the position of the musical key point of the music melody.

In some embodiments, the at least one music configuration item further comprises: a timbre configuration item and a music format configuration item;
based on a timbre corresponding to the timbre configuration item, generating a voice for a slogan from a custom text input in the slogan input box, the timbre of the voice for the slogan being the timbre corresponding to the timbre configuration item;
based on a music format corresponding to the music format configuration item, generating a music including the music format based on the voice for the slogan and the music melody.

In a second aspect, an embodiment of the present disclosure further provides a music generation apparatus, comprising:
a display unit configured to display a music generation interface in response to a trigger operation of a music generation control, the music generation interface including a text input box, a music generation control and at least one music configuration item;
a collection unit configured to obtain a custom text input by a user in response to a trigger operation of the text input box, and to determine configuration information corresponding to the at least one music configuration item in response to a trigger operation of the at least one music configuration item; and
a generation unit configured to generate a voice based on the custom text in response to a trigger operation of the music generation control, and determine a music melody based on the configuration information corresponding to the at least one music configuration item, generate a music including the voice corresponding to the custom text based on the voice and the music melody.

In a third aspect, an embodiment of the present disclosure further provides a system comprising at least one computing apparatus and at least one storage apparatus storing instructions, wherein the instructions, when executed by the at least one computing apparatus, cause the at least one computing apparatus to perform the steps of the music generation method described in any embodiment of the first aspect.

In a fourth aspect, an embodiment of the present disclosure further provides a computer-readable storage medium that stores programs or instructions that, when executed by at least one computing apparatus, cause the at least one computing apparatus to execute the steps of the music generation method as described in any embodiment of the first aspect.

As it can be seen, in at least some embodiments of the present disclosure, by displaying a music generation interface including a text input box, a music generation control and a music configuration item in response to an operation by a user triggering the music generation control, so that the user can input a custom text in the text input box and configure a music melody through the music configuration item, and then in response to an operation by the user triggering the music generation control, it is possible to generate a voice based on the custom text input by the user, and generate a music including the voice corresponding to the custom text based on the generated voice and the user configured music melody. Even if users do not have professional music skills, they can still create music and obtain music generated based on custom texts, which lowers the threshold for music creation and improves the efficiency for users to create music.

### BRIEF DESCRIPTION OF THE DRAWINGS

In order to more clearly illustrate the technical solutions of the embodiments of the present disclosure, the following will briefly introduce the drawings needed when describing the embodiments or related acts. Obviously, the drawings in the following description are only some embodiments of the present disclosure. For those of ordinary skilled in the art, other drawings can also be obtained based on these drawings.
FIG. 1 is an exemplary flow chart of a music generation method provided by an embodiment of the present disclosure;
FIG. 2 is an exemplary flow chart of a method for writing lyrics into music provided by an embodiment of the present disclosure;
FIG. 3 is a schematic diagram of a first interface provided by an embodiment of the present disclosure;
FIG. 4 is an exemplary flow chart of a method for generating staccato songs provided by an embodiment of the present disclosure;
FIG. 5 is a schematic diagram of a second interface provided by an embodiment of the present disclosure;
FIG. 6 is an exemplary block diagram of a music generation apparatus provided by an embodiment of the present disclosure;
FIG. 7 is an exemplary block diagram of a system including at least one computing apparatus and at least one storage apparatus for storing instructions provided by an embodiment of the present disclosure.

### DETAILED DESCRIPTION

In order to understand the above objects, features and advantages of the present disclosure more clearly, the present disclosure will be further described in detail below in conjunction with the accompanying drawings and embodiments. It is understood that the described embodiments are some, but not all, of the embodiments of the present disclosure. The specific embodiments described here are only used to explain the present disclosure, but not to limit the present disclosure. Based on the described embodiments of the present disclosure, all other embodiments obtained by those of ordinary skilled in the art fall within the scope of protection of the present disclosure.

It should be noted that in this description, relational terms such as "first" and "second" are only used to distinguish one entity or operation from another entity or operation, and do not necessarily require or imply there is such actual relationship or sequence between these entities or operations.

Currently, with the development of Internet technology and smart mobile devices (such as smartphones), music creation has become an important part in people's entertainment life. However, music creation requires certain professional music skills. Ordinary users may not be able to create music quickly because of lacking professional music skills. Ordinary users, however, when they are inspired, can still create excellent custom lyrics.

Therefore, there is an urgent need to provide a music generation solution so that ordinary users without professional music skills can also create their own music, thereby lowering the threshold for music creation.

Based on this, an embodiment of the present disclosure provides a music generation solution that can generate songs based on custom lyrics, so as to gather the inspiration of ordinary users into songs, so that ordinary users can also become musicians.

An embodiment of the present disclosure provides a music generation method, apparatus, system and storage medium. By displaying a music generation interface including a text input box, a music generation control and a music configuration item in response to an operation by a user triggering the music generation control, so that the user can input a custom text in the text input box and configure a music melody through the music configuration item, and then in response to an operation by the user triggering the music generation control, it is possible to generate a voice based on the custom text input by the user, and generate a music including the voice corresponding to the custom text based on the generated voice and the user configured music melody. Even if users do not have professional music skills, they can still create music and obtain music generated based on custom texts, which lowers the threshold for music creation and improves the efficiency for users to create music.

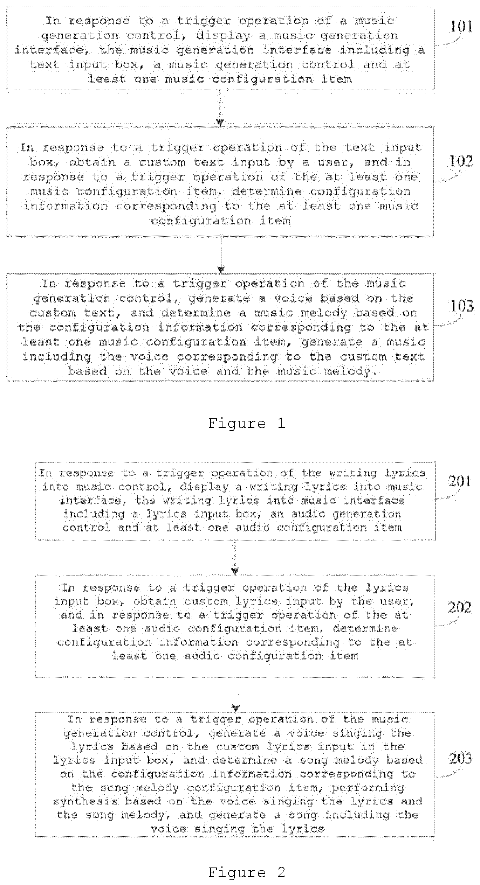

FIG. 1 is an exemplary flow chart of a music generation method provided by an embodiment of the present disclosure. The music generation method may include but not limited to the following steps 101 to 103:

101. In response to a trigger operation of a music generation control, display a music generation interface, the music generation interface including a text input box, a music generation control and at least one music configuration item.

Wherein, the music generation control is a functional control provided by a music toolbox for music generation. While the music toolbox is a software implementation that integrates multiple music generation functions. The music toolbox can be added to different objects as a software component, where the object can be a web page or an Application (APP).

The text input box may display a prompt, for example, the prompt is "Click to enter custom text used to generate music", so that the user knows to enter custom text in the text input box, and the custom text is used to generate a music, that is, the music includes a voice corresponding to the custom text.

The at least one music configuration item can be understood as a configuration item related to music, such as music melody, timbre, music format, etc.

102. In response to a trigger operation of the text input box, obtain a custom text input by a user, and in response to a trigger operation of the at least one music configuration item, determine configuration information corresponding to the at least one music configuration item.

Sample text can be displayed in the text input box, so that even if the user does not enter custom text, the subsequent music generation will not be affected, but the generated music will include a voice corresponding to the sample text.

The music configuration item can be preset with configuration information, so that even if the user does not configure the music configuration item, the subsequent music generation will not be affected, but the generated music will be generated based on the configuration information preset in the music configuration item.

103. In response to a trigger operation of the music generation control, generate a voice based on the custom text, and determine a music melody based on the configuration information corresponding to the at least one music configuration item, generate a music including the voice corresponding to the custom text based on the voice and the music melody.

If the custom text input by the user is not obtained, that is, the user does not enter the custom text in the text input box, in response to the trigger operation of the music generation control, generate a voice based on the sample text displayed in the text input box, and determine a music melody based on the configuration information corresponding to the at least one music configuration item, generate a music including the voice corresponding to the sample text based on the voice and the music melody.

If the user does not trigger the at least one music configuration item, in response to the trigger operation of the music generation control, generate a voice based on the custom text, and determine a music melody based on the preset configuration information of the at least one music configuration item, generate a music including the voice corresponding to the custom text based on the voice and the music melody.

If the user does not enter the custom text in the text input box and the user does not trigger the at least one music configuration item, in response to the trigger operation of the music generation control, generate a voice based on the sample text displayed in the text input box, and determine a music melody based on the configuration information preset by the at least one music configuration item, generate a music including a voice corresponding to the sample text based on the voice and the music melody.

As it can be seen, in this embodiment, by displaying a music generation interface including a text input box, a music generation control and a music configuration item in response to an operation by a user triggering the music generation control, so that the user can input a custom text in the text input box and configure a music melody through the music configuration item, and then in response to an operation by the user triggering the music generation control, it is possible to generate a voice based on the custom text input by the user, and generate a music including the voice corresponding to the custom text based on the generated voice and the user configured music melody. Even if users do not have professional music skills, they can still create music and obtain music generated based on custom texts, which lowers the threshold for music creation and improves the efficiency for users to create music.

FIG. 2 is an exemplary flow chart of a method for writing lyrics into music provided by an embodiment of the present disclosure. The method for writing lyrics into music may include but not limited to the following steps 201 to 203:

201. In response to a trigger operation of a first control, display a first interface, the first interface including a lyrics input box, a music generation control, and at least one music configuration item.

The first control is a writing lyrics into music generation control, and the first interface is a writing lyrics into music generation interface.

The lyrics input box may display a prompt, for example, the prompt is "Click to enter lyrics", so that the user knows to enter custom lyrics in the lyrics input box, and the custom lyrics are used to generate a music, that is, the music includes a voice corresponding to the custom lyrics.

The at least one music configuration item can be understood as a configuration item related to music, including: a song melody configuration item, a timbre configuration item and a music format configuration item.

202. In response to a trigger operation of the lyrics input box, obtain custom lyrics input by the user, and in response to a trigger operation of the at least one music configuration item, determine configuration information corresponding to the at least one music configuration item.

Wherein, the custom lyrics input by the user can be any piece of text, and the user does not need to be able to write lyrics, further reducing the difficulty of creation.

Sample lyrics can be displayed in the lyrics input box, so that even if the user does not enter custom lyrics, the subsequent music generation will not be affected, but the generated music will include a voice corresponding to the sample lyrics.

The music configuration item can be preset with configuration information, so that even if the user does not configure the music configuration item, the subsequent music generation will not be affected, but the generated music will be generated based on the configuration information preset in the music configuration item.

203. In response to a trigger operation of the music generation control, generate a voice singing the lyrics based on the custom lyrics input in the lyrics input box, and determine a song melody based on the configuration information corresponding to the song melody configuration item, performing synthesis based on the voice singing the lyrics and the song melody, and generate a song including the voice singing the lyrics.

Wherein, Singing Voice Synthesis (SVS) synthesizes singing based on lyrics and song melody. Compared with Text-To-Speech (TTS), which allows machines to "speak", singing voice synthesis allows machines to sing, so it is more entertaining. A singing voice synthesis model can be generated through pre-training. In this way, it only needs to input a timbre, custom text, and song melody into the singing voice synthesis model, and the singing voice synthesis model can output a music including the voice corresponding to the custom text. Wherein, the training of the singing voice synthesis model can follow related technologies, which will not be repeated here.

In some embodiments, if the user does not enter custom lyrics in the lyrics input box, in response to the trigger operation of the music generation control, generate a voice based on the sample text displayed in the lyrics input box, and determine a song melody based on the configuration information corresponding to the song melody configuration item, perform synthesis based on the voice and the song melody, and generate a music including the voice corresponding to the sample text.

In some embodiments, if the user does not trigger the music configuration item, in response to the trigger operation of the music generation control, generate a voice singing the lyrics based on the custom lyrics, and determine a song melody based on the configuration information preset by the song melody configuration item, perform synthesis based on the voice singing lyrics and the song melody, and generate a music including the voice singing lyrics.

In some embodiments, if the user does not enter custom lyrics in the lyrics input box and the user does not trigger the music configuration item, in response to the trigger operation of the music generation control, generate a voice based on the sample text displayed in the lyrics input box, and determine a song melody based on the configuration information preset by the song melody configuration item, perform synthesis based on the voice and the song melody, and generate a music including the voice corresponding to the sample text.

In some embodiments, the at least one music configuration item further includes: a timbre configuration item and a music format configuration item. Accordingly, based on the timbre corresponding to the timbre configuration item, generate a voice singing the lyrics from the custom text input in the lyrics input box, the timbre of the voice singing the lyrics being the timbre corresponding to the timbre configuration item; based on the music format corresponding to the music format configuration item, generate a song with the music format based on the voice singing the lyrics and the song melody.

In some embodiments, step 203 generates a voice singing the lyrics based on the custom text input in the lyrics input box, specifically including the following steps 2031 and 2032:

2031. Align the custom text with the song melody corresponding to the song melody configuration item, and determine the correspondence between text units in the custom text and notes in the song melody. Wherein, the text unit may be a combination of one or more of characters, words, sentences, and pronunciation units. The method for alignment is a mature technology in the field of music generation, which will not be repeated here.

2032. Generate the voice singing the lyrics from the aligned custom text.

As it can be seen, in this embodiment, by displaying a first interface including a lyrics input box, a music generation control and a music configuration item in response to an operation by a user triggering a first control, so that the user can input custom lyrics in the lyrics input box and configure the music melody through the music configuration item, and then in response to an operation by the user triggering the music generation control, it is possible to generate a voice singing the lyrics based on the custom lyrics input by the user, and generate a song including the voice corresponding to the custom lyrics based on the voice singing the lyrics and the song melody configured by the user. Even if users do not have professional music skills, they can still create music and obtain songs with a high degree of integration and natural singing effect generated based on custom lyrics, which achieves the effect of writing lyrics into music, and improves the efficiency for users to create music.

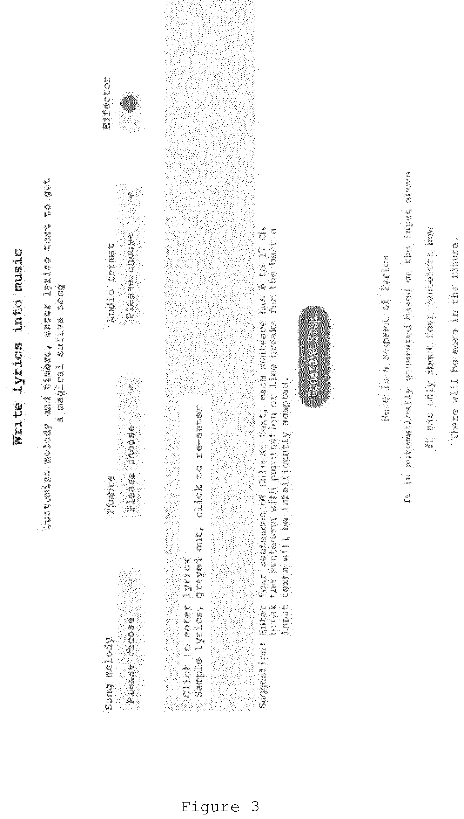

FIG. 3 is a schematic diagram of a first interface provided by an embodiment of the present disclosure. As shown in FIG. 3, the first interface includes a lyrics input box, a "Generate Song" control (i.e., a music generation control), and a plurality of music configuration items: a song melody configuration item, a timbre configuration item, a music format configuration item, and an effector configuration item.

In FIG. 3, in order to facilitate users to quickly understand functions of each element in the first interface, an introduction is added to the first interface: "Customize melody and timbre, enter lyrics text to get a magical saliva song." The content of the introduction can be modified as needed. In addition, a suggestion is added below the lyrics input box: "Enter four sentences of Chinese text, each sentence has 8 to 17 Chinese characters, and break the sentences with punctuation or line breaks for the best effect. Extremely long input texts will be intelligently adapted." The suggested content can be modified as needed. In addition, the lyrics of the generated song can be displayed under the "Generate Song" control.

In FIG. 3, the song melody configuration item is designed as a drop-down list. After the user triggers the song melody configuration item, multiple song melodies are displayed in the drop-down list so that the user can select a song melody. The configuration information preset by the song melody configuration item is the first melody in the drop-down list. Therefore, if the user does not trigger the song melody configuration item, that is, the user clicks the "Generate Song" control without selecting a song melody, in response to the click operation on the "Generate Song" control, generate a music including the voice corresponding to the custom lyrics based on the custom lyrics input by the user in the lyrics input box and the first melody.

In FIG. 3, the timbre configuration item is designed as a drop-down list. After the user triggers the timbre configuration item, multiple timbres are displayed in the drop-down list so that the user can select a timbre. The configuration information preset by the timbre configuration item is the first timbre in the drop-down list (for example, fresh female voice). Therefore, if the user does not trigger the timbre configuration item, that is, the user clicks the "Generate Song" control without selecting a timbre, in response to the click operation on the "Generate Song" control, generate a music including the voice corresponding to the custom lyrics based on the custom lyrics input by the user in the lyrics input box and the fresh female voice.

In FIG. 3, the music format configuration item is designed as a drop-down list. After the user triggers the music format configuration item, multiple music formats are displayed in the drop-down list so that the user can select a music format. The configuration information preset by the music format configuration item is the first music format in the drop-down list (such as mp3 format). Therefore, if the user does not trigger the music format configuration item, that is, the user clicks the "Generate Song" control without selecting a music format, in response to the click operation on the "Generate Song" control, generate a music in mp3 format including the voice corresponding to the custom lyrics.

In FIG. 3, the effector configuration item is designed as a switch. The user clicks the switch to turn on or turn off the effector. The configuration information preset by the effector configuration item is to turn on the effector. The effector is used to change the waveform of the original sound, modulate or delay the phase of the sound wave, enhance the harmonic components of the sound wave, and a series of other measures to produce various special sound effects, apply effects (effects, influences) to the timbre, and make the timbre brighter. It should be noted that, the effector may be implemented as a software component.

In some embodiments, the first interface may also include a player not shown in FIG. 3 to play the generated songs. Player options include but not limited to: Download, Add to favourites.

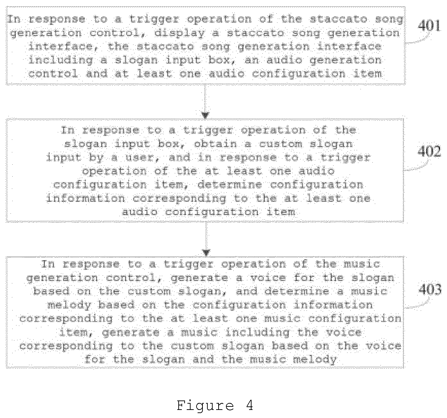

FIG. 4 is an exemplary flow chart of a method for generating staccato songs provided by an embodiment of the present disclosure. The method for generating staccato songs may include but not limited to the following steps 401 to 403:

401. In response to a trigger operation of a second control, display a second interface, the second interface including a slogan input box, a music generation control, and at least one music configuration item.

The second control is a staccato song generation control, and the second interface is a staccato song generation interface.

The slogan input box may display a prompt. For example, the prompt is "Click to enter Slogan" so that the user knows to enter a custom slogan in the slogan input box, and the custom slogan is used to generate a music, that is, the music includes a voice corresponding to the custom slogan.

The at least one music configuration item can be understood as a configuration item related to music, including: a music melody configuration item, a timbre configuration item and a music format configuration item.

402. In response to a trigger operation of the slogan input box, obtain a custom slogan input by a user, and in response to a trigger operation of the at least one music configuration item, determine configuration information corresponding to the at least one music configuration item.

A sample slogan can be displayed in the slogan input box, so that even if the user does not enter a custom slogan, the subsequent music generation will not be affected, but the generated music will include a voice corresponding to the sample slogan.

The music configuration item can be preset with configuration information, so that even if the user does not configure the music configuration item, the subsequent music generation will not be affected, but the generated music will be generated based on the configuration information preset in the music configuration item.

403. In response to a trigger operation of the music generation control, generate a voice for the slogan based on the custom slogan, and determine a music melody based on the configuration information corresponding to the at least one music configuration item, generate a music including the voice corresponding to the custom slogan based on the voice for the slogan and the music melody.

In some embodiments, the generating a music including the voice for the slogan based on the voice for the slogan and the music melody in step 403 comprises: determining a musical key point in the music melody, the music melody having a mutation at the position of the musical key point; based on the position of the musical key point, performing synthesis of the voice for the slogan with the music melody to obtain a synthesized music; in the synthesized music, the voice for the slogan appears at the position of the musical key point of the music melody.

In some embodiments, the at least one music configuration item further comprises: a timbre configuration item and a music format configuration item. Accordingly, based on a timbre corresponding to the timbre configuration item, generating a voice for a slogan from a custom text input in the slogan input box, the timbre of the voice for the slogan being the timbre corresponding to the timbre configuration item; based on a music format corresponding to the music format configuration item, generating a music including the music format based on the voice for the slogan and the music melody.

In some embodiments, if the user does not enter a custom slogan in the slogan input box, in response to the trigger operation of the music generation control, generate a voice for the sample slogan based on the sample slogan displayed in the slogan input box, and determine a music melody based on the configuration information corresponding to the at least one music configuration item, generate a music including the voice corresponding to the sample slogan based on the voice for the sample slogan and the music melody.

In some embodiments, if the user does not trigger the music configuration item, in response to the trigger operation of the music generation control, generate a voice for the slogan based on the custom slogan, and determine a music melody based on the configuration information preset by the at least one music configuration item, generate a music including the voice corresponding to the custom slogan based on the voice for the slogan and the music melody.

In some embodiments, if the user does not enter a custom slogan in the slogan input box and the user does not trigger the music configuration item, in response to the trigger operation of the music generation control, generate a voice for the sample slogan based on the sample slogan displayed in the slogan input box, and determine a music melody based on the configuration information preset by the at least one music configuration item, generate a music including the voice corresponding to the sample slogan based on the voice for the sample slogan and the music melody.

In some embodiments, the voice corresponding to the custom slogan in step 403 is a voice obtained using a Text-To-Speech (TTS) method.

As it can be seen, in this embodiment, by displaying a second interface including a slogan input box, a music generation control and a music configuration item in response to an operation by a user triggering the second control, so that the user can input a custom slogan in the slogan input box and configure the music melody through the music configuration item, and then in response to an operation by the user triggering the music generation control, it is possible to generate a voice for the slogan based on the custom slogan input by the user, and generate a music including the voice corresponding to the custom slogan based on the voice for the slogan and the music melody configured by the user. Even if users do not have professional music skills, they can still obtain music generated based on custom text, improving the efficiency for users to create music.

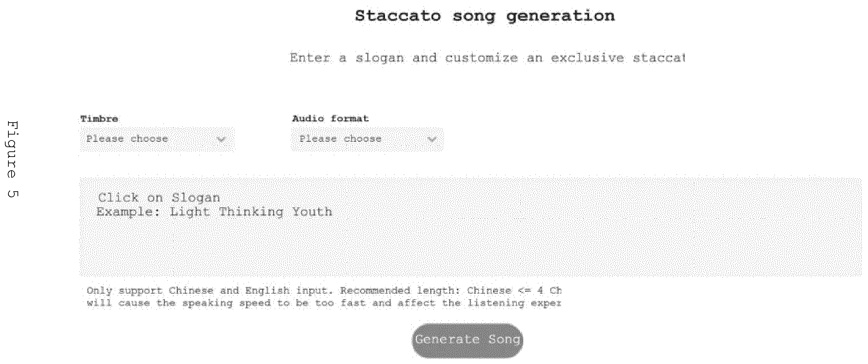

FIG. 5 is a schematic diagram of a second interface provided by an embodiment of the present disclosure. As shown in FIG. 5, the second interface includes a slogan input box, a "Generate Song" control (i.e., a music generation control), and a plurality of music configuration items: a timbre configuration item and a music format configuration item.

In FIG. 5, in order to facilitate users to quickly understand functions of each element in the second interface, an introduction is added to the second interface: "Enter a slogan, customize an exclusive staccato song". The content of the introduction can be modified as needed. In addition, a suggestion is added below the slogan input box: "Only support Chinese and English input. Recommended length: Chinese <= 4 words. Too many characters will cause the speaking speed to be too fast and affect the listening experience." The suggested content can be modified as needed.

In FIG. 5, the timbre configuration item is designed as a drop-down list. After the user triggers the timbre configuration item, multiple timbres are displayed in the drop-down list so that the user can select a timbre. The configuration information preset by this timbre configuration item is the first timbre in the drop-down list. Therefore, if the user does not trigger this timbre configuration item, that is, the user clicks the "Generate Song" control without selecting a timbre, in response to the click operation on the "Generate Song" control, generate a music including the voice corresponding to the custom slogan based on the custom slogan input by the user in the slogan input box and the first timbre.

In FIG. 5, the music format configuration item is designed as a drop-down list. After the user triggers the music format configuration item, multiple music formats are displayed in the drop-down list so that the user can select a music format. The configuration information preset by this music format configuration item is the first music format in the drop-down list (such as mp3 format). Therefore, if the user does not trigger this music format configuration item, that is, the user clicks "Generate Song" control without selecting a music format, in response to the click operation of the "Generate Song" control, generate a music in mp3 format including the voice corresponding to the custom slogan.

In some embodiments, the second interface may also include a player not shown in FIG. 5 to play the generated songs. Player options include but not limited to: Download, Add to favourites.

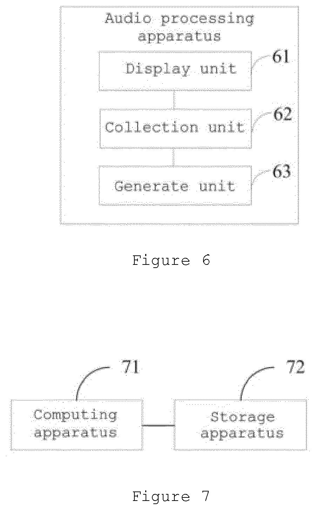

FIG. 6 is a music generation apparatus provided by an embodiment of the present disclosure. The music generation apparatus includes but not limited to: a display unit 61, a collection unit 62 and a generation unit 63.

The display unit 61 is configured to display a music generation interface in response to a trigger operation of a music generation control, the music generation interface including a text input box, a music generation control and at least one music configuration item;

The collection unit 62 is configured to obtain a custom text input by a user in response to a trigger operation of the text input box, and to determine configuration information corresponding to the at least one music configuration item in response to a trigger operation of the at least one music configuration item; and

The generation unit 63 is configured to generate a voice based on the custom text in response to a trigger operation of the music generation control, and determine a music melody based on the configuration information corresponding to the at least one music configuration item, generate a music including the voice corresponding to the custom text based on the voice and the music melody.

In some embodiments, a sample text is displayed in the text input box, and the generation unit 63 is further configured to: if the custom text input by the user is not obtained, in response to the trigger operation of the music generation control, generate a voice based on the sample text, and determine a music melody based on the configuration information corresponding to the at least one music configuration item, generate a music including the voice corresponding to the sample text based on the voice and the music melody.

In some embodiments, the music configuration items may be preset with configuration information, and the generation unit 63 is further configured to: if the user does not trigger the at least one music configuration item, in response to the trigger operation of the music generation control, generate a voice based on the custom text, and determine a music melody based on the preset configuration information of the at least one music configuration item, generate a music including the voice corresponding to the custom text based on the voice and the music melody.

In some embodiments, a sample text is displayed in the text input box, the music configuration items can be preset with configuration information, and the generation unit 63 is further configured to: if the custom text input by the user is not obtained and the user does not trigger the at least one music configuration item, in response to the trigger operation of the music generation control, generate a voice based on the sample text, and determine a music melody based on configuration information preset by the at least one music configuration item, generate a music including the voice corresponding to the sample text based on the voice and the music melody.

In some embodiments, the music generation control is a first control; the music generation interface is a first interface; the text input box is a lyrics input box; and the at least one music configuration item includes a song melody configuration item;

The generation unit 63 is configured to, in response to the trigger operation of the music generation control, generate a voice singing the lyrics based on the custom text input in the lyrics input box, and determine a song melody based on configuration information corresponding to the song melody configuration item, perform synthesis based on the voice singing the lyrics and the song melody, generate a song including the voice singing the lyrics.

In some embodiments, the generation unit 63 generating a voice singing the lyrics based on the custom text input in the lyrics input box comprises: aligning the custom text with the song melody corresponding to the song melody configuration item, and determining the correspondence between text units in the custom text and notes in the song melody; and generating the voice singing the lyrics from the aligned custom text.

In some embodiments, the at least one music configuration item further comprises: a timbre configuration item and a music format configuration item. The generation unit 63 is further to generate a voice singing the lyrics from the custom text input in the lyrics input box based on a timbre corresponding to the timbre configuration item, the timbre of the voice singing the lyrics being the timbre corresponding to the timbre configuration item; and based on a music format corresponding to the music format configuration item, generate a song with the music format based on the voice singing the lyrics and the song melody.

In some embodiments, the music generation control is a second control; the music generation interface is a second interface; the text input box is a slogan input box; and the at least one music configuration item includes a music melody configuration item. The generation unit 63 is configured to, in response to the trigger operation of the music generation control, generate a voice for a slogan based on a custom text input in the slogan input box, and determine a music melody based on configuration information corresponding to the music melody configuration item, generate a music including the voice for the slogan based on the voice for the slogan and the music melody.

In some embodiments, the generation unit 63 generating a music including the voice for the slogan based on the voice for the slogan and the music melody comprises: determining a musical key point in the music melody, the music melody having a mutation at the position of the musical key point; based on the position of the musical key point, performing synthesis of the voice for the slogan with the music melody to obtain a synthesized music; in the synthesized music, the voice for the slogan appears at the position of the musical key point of the music melody.

In some embodiments, the at least one music configuration item further comprises: a timbre configuration item and a music format configuration item. The generation unit 63 is configured to, based on a timbre corresponding to the timbre configuration item, generate a voice for a slogan from a custom text input in the slogan input box, the timbre of the voice for the slogan being the timbre corresponding to the timbre configuration item; based on a music format corresponding to the music format configuration item, generate a music including the music format based on the voice for the slogan and the music melody.

In some embodiments, the division of various units in the music generation apparatus is only a logical function division. In actual implementation, there may be other division methods. For example, at least two units in the music generation apparatus may be implemented as one unit; various units in the music generation apparatus can also be divided into multiple sub-units. It is understood that various units or sub-units can be implemented as electronic hardware, or a combination of computer software and electronic hardware. Whether these functions are performed in hardware or software depends on the specific application and design constraints of the technical solution. Those skilled in the art may use different methods to implement the described functions for each specific application.

FIG. 7 is an exemplary block diagram of a system including at least one computing apparatus and at least one storage apparatus for storing instructions provided by an embodiment of the present disclosure. In some embodiments, the system can be used for big data processing, and the at least one computing apparatus and the at least one storage apparatus can be deployed in a distributed manner, making the system a distributed data processing cluster.

As shown in FIG. 7, the system comprises: at least one computing apparatus 71 and at least one storage apparatus 72 for storing instructions. It can be understood that the storage apparatus 72 in this embodiment may be a volatile memory or a non-volatile memory, or may include both volatile and non-volatile memories.

In some implementations, the storage apparatus 72 stores the following elements, executable units or data structures, or subsets thereof, or extensions thereof: an operating system and application programs.

Wherein, the operating system includes various system programs, such as a framework layer, a core library layer, a driver layer, etc., which are used to implement various basic tasks and process hardware-based tasks. Application programs include various application programs, such as media players, browsers, etc., which are used to implement various application tasks. A program that implements the music generation method provided by the embodiments of the present disclosure may be included in an application program.

In the embodiment of the present disclosure, the at least one computing apparatus 71 is used to execute steps of various embodiments of the music generation method provided by the embodiments of the present disclosure by calling a program or instruction stored in the at least one storage apparatus 72, specifically, it may be a program or instruction stored in an application program.

The music generation method provided by the embodiment of the present disclosure can be applied in the computing apparatus 71 or implemented by the computing apparatus 71. The computing apparatus 71 may be an integrated circuit chip with signal processing capabilities. During the implementation, each step of the above method can be completed by hardware integrated logic circuits or instructions in the form of software in the computing apparatus 71. The above computing apparatus 71 may be a general-purpose processor, a Digital Signal Processor (DSP), an Application Specific Integrated Circuit (ASIC), a Field Programmable Gate Array (FPGA), or other programmable logic devices, discrete gates or transistor logic devices, discrete hardware components. The general-purpose processor may be a microprocessor or the processor may be any conventional processor, etc.

The steps of the music generation method provided by the embodiments of the present disclosure can be directly embodied as executing and completing by a hardware decoding processor, or by a combination of hardware and software units in the decoding processor. The software unit can be located in a mature storage medium in the art, such as a random-access memory, a flash memory, a read-only memory, a programmable read-only memory or an electrically erasable programmable memory, a register etc. The storage medium is located in the storage apparatus 72. The computing apparatus 71 reads the information in the storage apparatus 72 and completes the steps of the method in combination with its hardware.

An embodiment of the present disclosure also provides a computer-readable storage medium that stores programs or instructions that, when executed by at least one computing apparatus, cause the at least one computing apparatus to perform steps as those in various embodiments of the music generation methods, which will not be repeated here to avoid repeated description. Wherein, the computing apparatus may be the computing apparatus 71 shown in FIG. 7. In some embodiments, the computer-readable storage medium is a non-transitory computer-readable storage medium.

An embodiment of the present disclosure also provides a computer program product, wherein the computer program product includes a computer program, the computer program is stored in a non-transitory computer-readable storage medium, and at least one processor of the computer reads and executes the computer program from the storage medium, and causes the computer to execute steps as those in various embodiments of the music generation methods, which will not be repeated here to avoid repeated description.

It should be noted that, herein, the terms " comprise", " include" or any other variations thereof are intended to cover a non-exclusive inclusion such that a process, method, article or apparatus that comprises a series of elements includes not only those elements, but also other elements that are not expressly listed, or elements inherent to the process, method, article or apparatus. Without further limitation, an element qualified by the statement "comprises... " does not exclude the presence of additional identical elements in the process, method, article or apparatus that includes the element.

Those skilled in the art can understand that, although some embodiments described herein include certain features included in other embodiments but not others, combinations of features of different embodiments are meant to be within the scope of the present disclosure and form different embodiments.

Those skilled in the art can understand that, the description of each embodiment has its own emphasis. For parts that are not described in detail in a certain embodiment, they may be referred to relevant descriptions in other embodiments.

Although the embodiments of the present disclosure have been described in conjunction with the accompanying drawings, those skilled in the art can make various modifications and variations without departing from the spirit and scope of the disclosure, and all such modifications and variations fall within the scope defined by the appended claims.

## Claims

1. A music generation method, the method comprising:
in response to a trigger operation of a music generation control, displaying a music generation interface, the music generation interface including a text input box, a music generation control and at least one music configuration item;
in response to a trigger operation of the text input box, obtaining a custom text input by a user, and in response to a trigger operation of the at least one music configuration item, determining configuration information corresponding to the at least one music configuration item; and
in response to a trigger operation of the music generation control, generating a voice based on the custom text, and determining a music melody based on the configuration information corresponding to the at least one music configuration item, generating a music including the voice corresponding to the custom text based on the voice and the music melody.

2. The method according to claim 1, wherein, a sample text is displayed in the text input box, and the method further comprising:
if the custom text input by the user is not obtained, in response to the trigger operation of the music generation control, generating a voice based on the sample text, and determining a music melody based on the configuration information corresponding to the at least one music configuration item, generating a music including the voice corresponding to the sample text based on the voice and the music melody.

3. The method according to claim 1, wherein, the music configuration items can be preset with configuration information, and the method further comprising:
If the user does not trigger the at least one music configuration item, in response to the trigger operation of the music generation control, generating a voice based on the custom text, and determining a music melody based on the preset configuration information of the at least one music configuration item, generating a music including the voice corresponding to the custom text based on the voice and the music melody.

4. The method according to claim 1, wherein, a sample text is displayed in the text input box, the music configuration items can be preset with configuration information, and the method further comprising:
If the custom text input by the user is not obtained and the user does not trigger the at least one music configuration item, in response to the trigger operation of the music generation control, generating a voice based on the sample text, and determining a music melody based on configuration information preset by the at least one music configuration item, generating a music including the voice corresponding to the sample text based on the voice and the music melody.

5. The method according to any one of claims 1 to 4, wherein, the music generation control is a first control; the music generation interface is a first interface; the text input box is a lyrics input box; and the at least one music configuration item includes a song melody configuration item;
in response to the trigger operation of the music generation control, generating a voice singing the lyrics based on the custom text input in the lyrics input box, and determining a song melody based on configuration information corresponding to the song melody configuration item, performing synthesis based on the voice singing the lyrics and the song melody, generating a song including the voice singing the lyrics.

6. The method according to claim 5, wherein, the generating a voice singing the lyrics based on the custom text input in the lyrics input box comprises:
aligning the custom text with the song melody corresponding to the song melody configuration item, and determining the correspondence between text units in the custom text and notes in the song melody; and
generating the voice singing the lyrics from the aligned custom text.

7. The method according to claim 5, wherein, the at least one music configuration item further comprises: a timbre configuration item and a music format configuration item;
generating a voice singing the lyrics from the custom text input in the lyrics input box based on a timbre corresponding to the timbre configuration item, the timbre of the voice singing the lyrics being the timbre corresponding to the timbre configuration item; and
generating a song with the music format based on a music format corresponding to the music format configuration item and based on the voice singing the lyrics and the song melody.

8. The method according to any one of claims 1 to 4, wherein, the music generation control is a second control; the music generation interface is a second interface; the text input box is a slogan input box; and the at least one music configuration item includes a music melody configuration item;
in response to the trigger operation of the music generation control, generating a voice for a slogan based on a custom text input in the slogan input box, and determining a music melody based on configuration information corresponding to the music melody configuration item, generating a music including the voice for the slogan based on the voice for the slogan and the music melody.

9. The method according to claim 8, wherein, the generating a music including the voice for the slogan based on the voice for the slogan and the music melody comprises:
determining a musical key point in the music melody, the music melody having a mutation at the position of the musical key point; and
based on the position of the musical key point, performing synthesis of the voice for the slogan with the music melody to obtain a synthesized music; in the synthesized music, the voice for the slogan appears at the position of the musical key point of the music melody.

10. The method according to claim 8, wherein, the at least one music configuration item further comprises: a timbre configuration item and a music format configuration item;
based on a timbre corresponding to the timbre configuration item, generating a voice for a slogan from a custom text input in the slogan input box, the timbre of the voice for the slogan being the timbre corresponding to the timbre configuration item; and
generating a music including the music format based on a music format corresponding to the music format configuration item and based on the voice for the slogan and the music melody.

11. A music generating apparatus, the apparatus comprising:
a display unit configured to display a music generation interface in response to a trigger operation of a music generation control, the music generation interface including a text input box, a music generation control and at least one music configuration item;
a collection unit configured to obtain a custom text input by a user in response to a trigger operation of the text input box, and to determine configuration information corresponding to the at least one music configuration item in response to a trigger operation of the at least one music configuration item; and
a generation unit configured to generate a voice based on the custom text in response to a trigger operation of the music generation control, and determine a music melody based on the configuration information corresponding to the at least one music configuration item, generate a music including the voice corresponding to the custom text based on the voice and the music melody.

12. A system comprising at least one computing apparatus and at least one storage apparatus storing instructions, wherein the instructions, when executed by the at least one computing apparatus, cause the at least one computing apparatus to perform the steps of the music generation method of any one of claims 1 to 10.

13. A computer-readable storage medium that stores programs or instructions that, when executed by at least one computing apparatus, cause at least one computing apparatus to execute any one the steps of the music generation method of any one of claims 1 to 10.
